# EUROPEAN PATENT SPECIFICATION

(11) **EP 2 722 976 B1**
(45) Date of publication and mention of the grant of the patent: **11.03.2020**
(21) Application number: 13189320.8
(22) Date of filing: 18.10.2013
(51) Int. Cl.: H02K 15/02, H02K 1/14

(54) **Die assembly and method for manufacturing wound motor laminated article**
Matrizenanordnung und Verfahren zur Herstellung eines laminierten Artikels eines gewickelten Motors
Ensemble de matrice et procédé de fabrication d'un article laminé pour moteur à enroulement

(30) Priority: 18.10.2012 US 201261715710 P
(43) Date of publication of application: 23.04.2014
(73) Proprietor: L.H. Carbide Corporation, Fort Wayne, IN 46804 (US)
(72) Inventor: Neuenschwander, Thomas R., Fort Wayne, IN 46804 (US); Lee, Barry A., Fort Wayne, IN 46809 (US)
(74) Representative: RACKETTE Patentanwälte PartG mbB

(56) References cited:
- EP-A2- 1 026 809
- JP-A- S53 114 003
- JP-A- 2004 312 858
- JP-A- 2005 224 054
- JP-A- 2009 296 796
- JP-A- 2010 130 842
- JP-U- S58 647
- JP-U- S51 124 801
- US-A1- 2004 064 936
- US-B2- 7 667 367

## Description

### BACKGROUND OF THE INVENTION

### 1. Technical Field.

The present disclosure relates generally to a stator core and to a progressive stamping die assembly apparatus, and more particularly to an apparatus for the manufacture of a wound stator core made from a continuous strip of material.

### 2. Description of the Related Art.

The manufacture of parts, e.g., stators and rotors for electric motors, ignition assembly cores, or other parts is well known in the art. One known method is to use individual laminas that are blanked from a continuous strip of stock material and are then stacked and bound together to form the completed part. Progressive die assemblies are used for producing such lamina stacks, in which a strip of lamina material is fed through a sequence of punching steps to progressively form the individual laminas to the desired end configurations.

Alternatively, a wound laminated article may be created by winding a continuous strip of material around a spool, in the manner of a spooled tape, such that the substantially cylindrical stator core is created by winding several layers of the continuous strip over one another. These wound laminated articles may be referred to as "axial flux" stators, which have stator slots extending radially outwardly through the stator material rather than axially along the stator walls as is common in stacked configurations. Axial flux stators typically have wire "end turns," i.e., the wire bend between slots, which begins beyond the axial end of the stator slot in order to avoid impingement of the wire on the sharp corner at the end of the slot. Document JP S51 124801 U8 discloses a stator core for an axial flux machine which is manufactured by stamping a continuous strip of material.

However, in some cases it may be desirable to form the end turns of the wire such that the wire bends as the wire exits from the stator slot. In traditional axial flux stator cores, this may expose the wire to a sharp corner at the end of the slot.

What is needed is a punch and die assembly and method which is an improvement over the foregoing, e.g., which facilitates the formation of end turns at the axial ends of the stator slots.

### SUMMARY

The present disclosure provides a method and apparatus for forming a metal article, such as a stator core, from a continuous strip of wound sheet stock material as well as said stator core. The sheet stock material is converted from the sheet stock to a formed material including winding slot cutouts. This strip of formed material is then wound around an arbor into the finished article, such as the stator core, with the plane of the incoming formed strip material remaining substantially parallel with a longitudinal axis of the finished article.

The winding slot cutouts in the formed material are maintained at a substantially constant width throughout most of the radial extent of the resulting winding slots in the finished article, except that one or more of the first and/or last wound layers (i.e., the radially innermost and radially outermost layers) may define winding slot cutouts that are wider than the other winding slot cutouts. Where several radial layers are altered in this way, the cutout widths are progressively expanded such that the resulting winding slot has terminal ends with edges that defining a stair-step profile that approximates a "radiused" or rounded edge. This rounded edge profile protects windings projecting radially into or outwardly from the winding slots near the edge of such slots.

In one form thereof, the present disclosure provides a production machine comprising a punch and die assembly comprising: an upper punch assembly comprising a plurality of punches longitudinally arranged with respect to one another along a first direction; a lower die assembly configured to cooperate with the plurality of punches of the upper punch assembly to punch a plurality of lamina features into a strip of material, the lamina features substantially within the plane of the strip; a material feed path passing between the upper punch assembly and the lower die assembly, such that the plurality of punches are selectively engageable with the material feed path to selectively punch one of the plurality of lamina features into the strip as the strip moves along a material feed path direction; a rewinding apparatus positioned downstream of the punch and die assembly, the rewinding apparatus rotatable to take up material from the material feed path after the lamina features are punched into the strip.

In another form thereof, the present disclosure provides a method of producing a wound article from a strip of material, the method comprising: feeding a strip of bulk material to a punch and die assembly; punching a plurality of winding slot cutouts into the bulk material to create a formed material; and winding the formed material around itself such that a substantially cylindrical structure is created, the plurality of winding slot cutouts selectively aligned with one another to create at least one winding slot in the substantially cylindrical structure, wherein the step of punching a plurality of winding slot cutouts comprises punching a cutout having a first cutout size at intermediate radial layers of the substantially cylindrical structure and a second cutout size for at least one of a radially innermost and radially outermost layers of the substantially cylindrical structure, the second cutout size greater than the first cutout size such that at least one axial end of the winding slot defines a stair-step profile approximating a rounded corner.

In yet another form thereof, the present disclosure provides a stator core comprising: a central opening bounded at its periphery by an innermost layer having at least one innermost winding slot cutout defining an innermost cutout width; an outermost layer radially spaced from the innermost layer and having at least one outermost winding slot cutout defining an outermost cutout width; and a main stator body comprising a plurality of intermediate layers between the innermost layer and the outermost layer, each of the plurality of intermediate layers having at least one intermediate winding slot cutout defining an intermediate cutout width, the innermost layer, the outermost layer and the intermediate layers formed from a continuous strip of wound material such that the innermost winding slot cutout, the outermost winding slot cutout and the intermediate winding slot cutouts are respectively aligned with one another to form a winding slot, and at least one of the innermost cutout width and the outermost cutout width is larger than the intermediate cutout width, whereby the winding slot defines a stair-step profile approximating a rounded edge at a radial end of the winding slot.

### BRIEF DESCRIPTION OF THE DRAWINGS

The above-mentioned and other features of the disclosure, and the manner of attaining them, will become more apparent and will be better understood by reference to the following description of an embodiment of the invention taken in conjunction with the accompanying drawings, wherein:
Fig. 1 is a perspective view of a generally cylindrical laminated article made from a continuous strip of material in accordance with the present disclosure;
Fig. 2 is a perspective view of a portion of the laminated article shown in Fig. 1, illustrating progressively widening winding slot cutouts defining a stair-step profile which approximates a rounded radial outward edge of the winding slot;
Fig. 3 is a rear perspective view of the laminated article shown in Fig. 1, illustrating weld slots formed therein;
Fig. 3a is a partial perspective view of a portion of the laminated article shown in Fig. 3, illustrating alternative weld slots formed therein;
Fig. 4 is a side elevation view of a production apparatus designed for production of a continuously wound laminated article in accordance with the present disclosure, the production apparatus including a punch and die assembly made in accordance with the present disclosure;
Fig. 5 is a partial elevation, cross-section view of a portion of the production apparatus shown in Fig. 4, illustrating the punch and die assembly;
Fig. 6 is a top plan view of the punch and die assembly shown in Figs. 4 and 5, illustrating a plurality of dies transversely movable with respect to the feed path of the material;
Fig. 6A is a top plan view of another punch and die assembly in accordance with the present disclosure, illustrating a plurality of punches and dies movable along a path aligned with the feed path of the material;
Fig. 7 is a side elevation view of a takeup system made in accordance with the present disclosure, including a movable takeup reel and movable pressure rollers;
Fig. 8A is a plan view of a punched strip of material capable of being wound into a radially inward layer of the laminated article shown in Fig. 1;
Fig. 8B is a plan view of a punched strip of material capable of being wound into a radially outward layer of the laminated article shown in Fig. 1;
Fig. 8C is a plan view of a leading edge of a strip of material formed in accordance with the present disclosure, illustrating a pin catch aperture sized to engage a takeup pin formed on the takeup reel of Fig. 7;
Fig. 9A is a front elevation view of an alternative stator core made in accordance with the present disclosure, in which the stator slots are skewed with respect to a radial outward direction;
Fig. 9B is a front elevation view of another alternative stator core made in accordance with the present disclosure, in which the stator slots are arcuate;
Fig. 9C is a front elevation view of yet another alternative stator core made in accordance with the present disclosure, in which the stator slots are double-arcuate;
Fig. 9D is a front elevation view of still another alternative stator core made in accordance with the present disclosure, in which the stator slots are double-skewed; and
Fig. 9E is a side elevation view of another alternative stator core made in accordance with the present disclosure, in which the stator slots are skewed with respect to an axial direction;
Fig. 10 is a perspective view of the punch and die assembly schematically illustrated in Fig. 6A, illustrating components of an exemplary arrangement of the die assembly;
Fig. 11 is a side elevation, cross-sectional view of the punch and die assembly of Fig. 10; and
Figs. 12-15 are side elevation, partial cross-sectional views of the punch and die apparatus shown in Fig. 11, illustrating different stages of engagement between a press and various punch assemblies.

Corresponding reference characters indicate corresponding parts throughout the several views. The exemplifications set out herein illustrate an embodiment of the disclosure and such exemplifications are not to be construed as limiting the scope of the invention in any manner.

### DETAILED DESCRIPTION

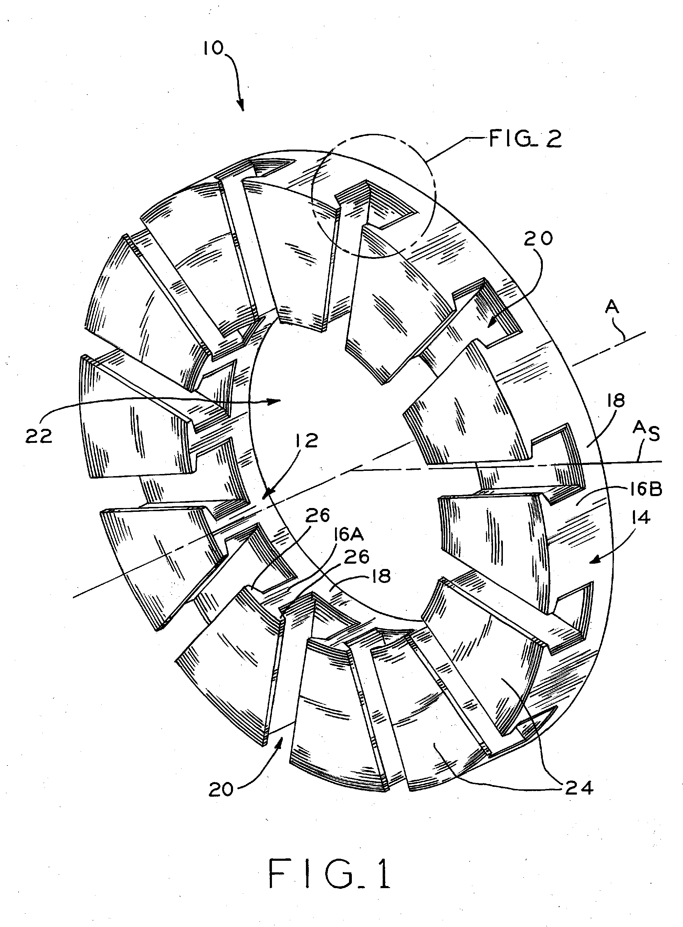

Referring now to Fig. 1, the present disclosure provides wound laminated article 10, formed as a stator core with an innermost layer 12 defining central opening 22, outermost layer 14 spaced radially from innermost layer 12 and a plurality of intermediate layers interposed therebetween. Wound laminated article 10 has a plurality of winding slots 20 (e.g., twelve slots 20 as illustrated) extending from radially innermost layer 12 to radially outermost layer 14 of the continuous strip of material used to form article 10, as described in detail below. Interposed between neighboring pairs of winding slots 20 are winding poles 24, which define a relatively narrow width at innermost pole pieces 16A and a relatively wider width at outermost pole pieces 16B, as also described below. Winding poles 24 extend axially outwardly from base 18 of article 10 along a direction parallel to longitudinal axis A, which is defined by the generally cylindrical arrangement of article 10 as shown. Winding poles 24 optionally include lateral extensions 26 disposed axially opposite article base 18 which partially (but not fully) enclose winding slots 20 and form a "T" shape with poles 24. It is also contemplated that lateral extensions 26 can be omitted such that the sidewalls of slots 20 extend axially to the axial terminal end of slots 20.

When used in a motor or generator assembly, for example, bundles of conductive (e.g., copper) windings are received within winding slots 20 and interconnected with one another. When article 10 is assembled with a rotor (not shown), these windings can electrically (i.e., electromagnetically) interact with the rotor to form a motor system capable of converting electrical charge to a motive force. Conversely, the assembly of article 10 and the rotor may be used to form a generator system capable of converting motive force to electrical charge.

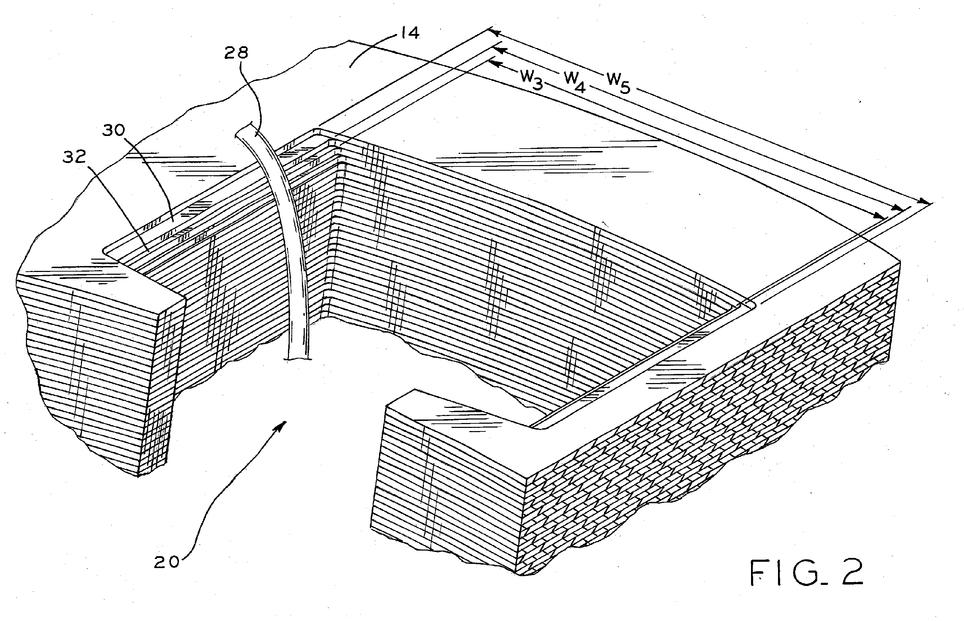

Winding wire 28 (Fig. 2) may form a part of a bundle of such windings, which may be oriented to protrude radially outwardly from winding slot 20. Wire 28 is positioned such that, in some cases, wire 28 is made to bend sharply around outer layers 14, 30, 32 of wound laminated article 10 as illustrated. As described in further detail below, radially outermost layer 14 and underlying outer layers 30, 32 may define progressively narrowing winding slot sizes/dimensions, such as widths W₅, W₄, W₃ *et seq.,* to provide a stair-step profile at the radial end of winding slot 20 which approximates a generally rounded edge. This rounded edge presents a more gradual transitional space for wire 28, thereby avoiding or minimizing damage to winding wire 28 and any other sharply bending portions of the motor windings.

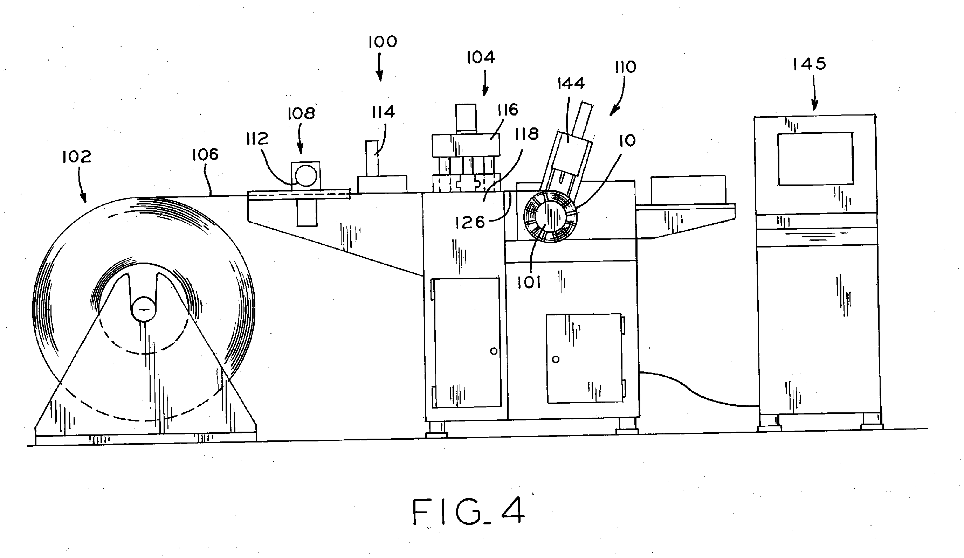

Turning now to Fig. 4, wound laminated article 10 is formed by winding a continuous strip of material around a circular arbor, shown as takeup reel 101. This winding process starts with radially innermost layer 12 (Fig. 1) and progressively winds additional layers of material thereupon until a desired finished diameter is reached at radially outermost layer 14. Such winding is accomplished in the manner of a spiral, in similar fashion to the winding of tape onto a spool, such that the finished product is substantially cylindrical as illustrated.

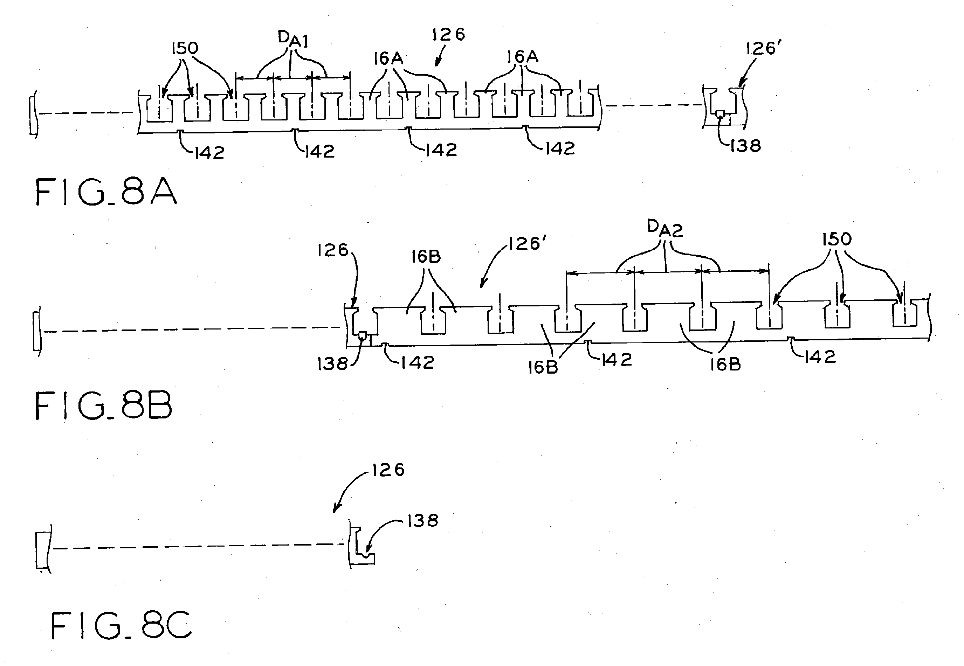

As described in detail below, each successive layer of formed material 126 wound around takeup reel 101 is geometrically sized and configured by punch and die assembly 104 to precisely overlay the preceding layer such that winding slots 20 radially align to extend continuously radially outwardly from innermost layer 12 to outermost layer 14 along radial axis A_{S} (Fig. 1). Stated another way, all winding slot cutouts 150 (Figs. 8A, 8B) are formed to align with one another upon winding, such that winding slot cutouts 150 extend in an uninterrupted fashion throughout their radial extents, and have a desired width profile (such as with a standard width across the radial extent as shown).

However, as noted herein, the width of winding slots 20 flares outwardly at the radial terminal ends of winding slots 20, i.e., the ends adjacent to innermost layer 12 and outermost layer 14 (Fig. 2). These outward flares provide a stepped profile that approximates a "radiused" or rounded lateral edge at such radial ends to protect winding wires engaging these edges, such as winding wire 28 as shown in Fig. 2. These radiused lateral edges are made possible by virtue of each of the opposing sides defining respective widths W₁ - W₅ of slots 20 having a substantially equivalent profile for each layer, from innermost layer 12 to outermost layer 14. This equivalent profile means that the opposing edges that make up the width of each slot have substantially the same outline and one edge is a mirror-image of the edge that opposes it.

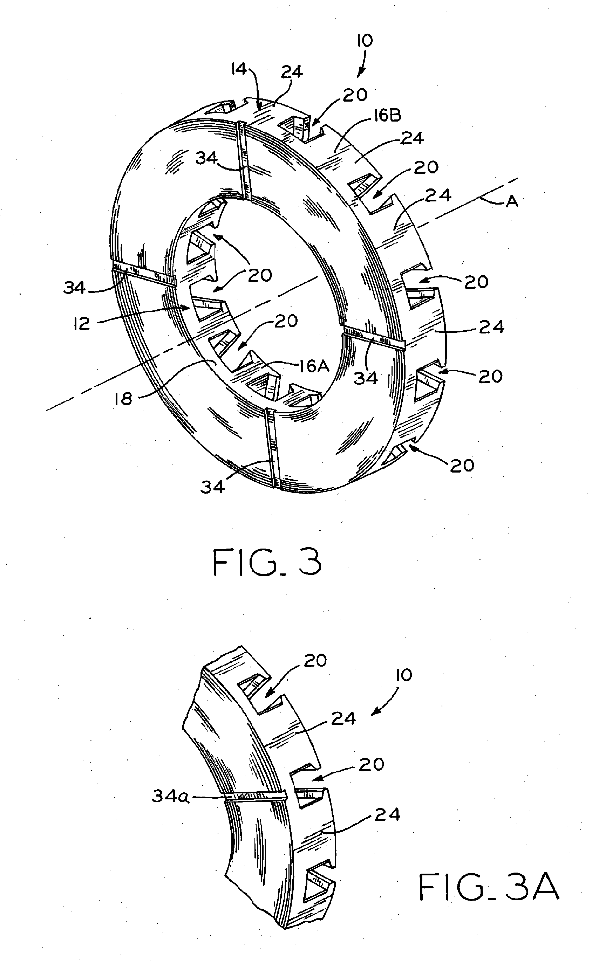

In addition to formation of such uninterrupted winding slots 20, the process of creating wound article 10 (i.e., stamping bulk material 106 and rewinding the resulting formed material 126, as further described below) may also create weld slots 34 in a surface of article base 18 opposite winding poles 24, as shown in Fig. 3. Upon completion of the winding process which finishes article 10, weld slots 34 can be used to permanently bind each adjacent radial layer of article 10 to one another to create a unitary, substantially cylindrical laminated article such as the stator core shown in the exemplary embodiment of the present figures. Although weld slots 34 are shown extending radially outwardly in a position generally aligned with the centers of respective poles 24, it is also contemplated that weld slots 34a may be provided which are generally aligned with the centers of winding slots 20. Only one weld slot 34a is illustrated in Fig. 3, it being understood that any number of weld slots 34a may be included with wound laminated article 10.

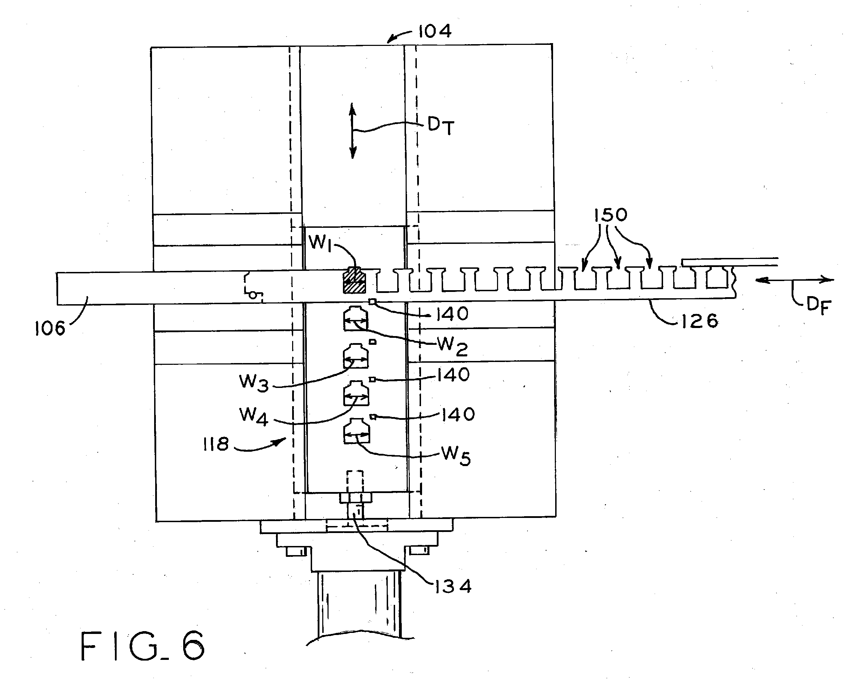

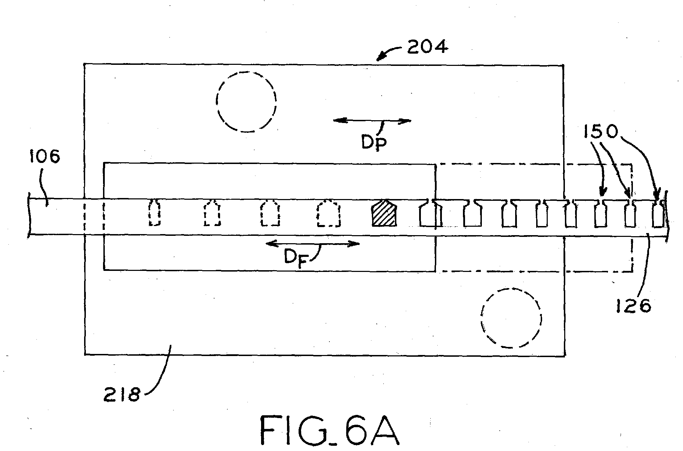

Winding slot cutouts 150 (Figs. 6 and 6A) are aligned with one another in wound article 10 such that winding slots 20 each extend radially outwardly along respective winding slot axes, such as axis A_{S} shown in Fig. 1. Slots 20 extend directly radially outwardly, such that their respective longitudinal axes (including axis A_{S}) each intersect the center of the circle defined by innermost and outermost layers 12, 14 at axis A. In the illustrated embodiment, slots 20 also define a constant width and cross-sectional geometry along their longitudinal extents, except for the inner and outer layers with progressively widening slot cutouts 150 as described above.

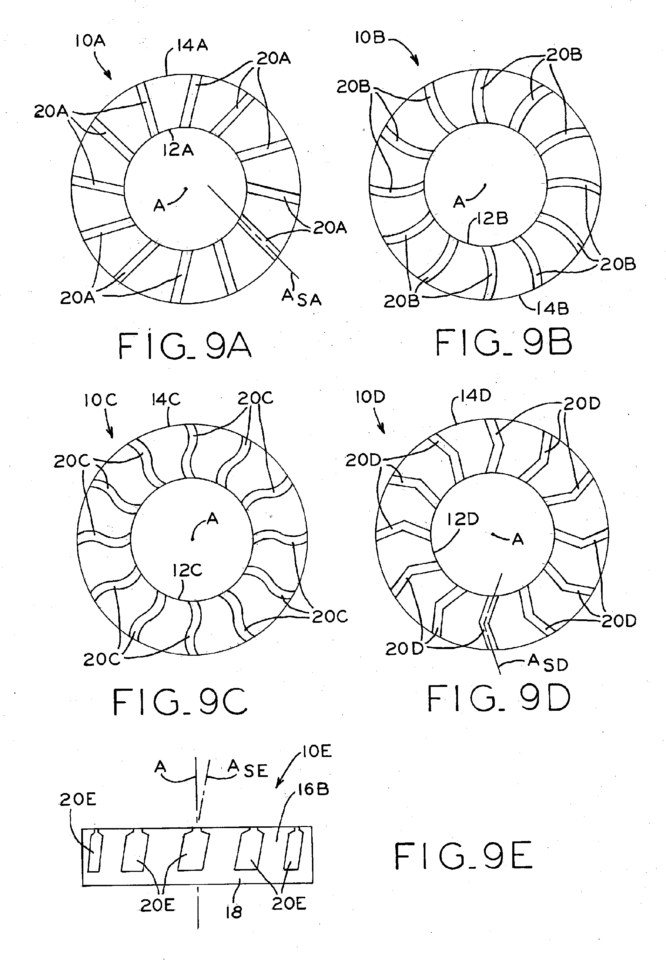

However, it is contemplated that the nature of the alignment of winding slot cutouts 150 can be altered to produce any longitudinal and cross-sectional geometry for winding slots 20, as required or desired for a particular application. Referring to Fig. 9A, for example, winding slots 20A of alternative wound article 10A may define axes A_{SA} which remain substantially perpendicular with respect to axis A but are skewed with respect to the strictly radial directionality of axis A_{S} of slot 20 (Fig. 1). Thus, because axis A_{SA} is skewed as illustrated, it never intersects axis A defined by article 10A.

Similarly, Fig. 9B illustrates alternative article 10B with winding slots 20B having an arcuate longitudinal axial profile. Fig. 9C illustrates alternative article 10C with winding slots 20C having a double-arcuate longitudinal axial profile, in which the curvature of the arcuate profile changes between innermost layer 12C and outermost layer 14C. Fig. 9D illustrates alternative article 10D with winding slots 20D having a double-skewed longitudinal axial profile, in which longitudinal axis A_{SD} makes a turn to define an angled profile between innermost layer 12D and outermost layer 14D as shown. Finally, Fig. 9E illustrates alternative article 10E with winding slots 20E having transverse axes A_{SE} which are skewed with respect to axis A of article 10, i.e., transverse axis A_{SE} is substantially parallel to axis A in a plane normal the drawing page but is angled with respect to axis A in the plane of the page as illustrated. Moreover, any combination of the above winding slot profile modifications, and any other modifications of profile cross-sectional geometry and/or arrangement, may be utilized in accordance with the present disclosure.

Turning again to Fig. 4, an exemplary method and apparatus for producing wound laminated article 10 will now be described with respect to production machine 100. Production machine 100 is shown schematically, it being understood that the specific systems included with machine 100 may be varied according to the particular needs production and the features included with wound laminated article 10. One exemplary production machine 100 which may be used in accordance with the present disclosure is available from Boccadoro SA of Losone, Switzerland.

Production begins with a spool of wound bulk material, shown as material spool 102 in Fig. 4. Although material spool 102 is a convenient solution for providing a continuous feed of bulk material to punch and die assembly 104 as described in detail below, it is of course contemplated that such bulk material may be provided in other ways, such as directly from a material production line.

Bulk material 106 is fed from material spool 102 to intake 108 of production machine 100. Intake 108 may include various apparatuses for preprocessing of the bulk material 106, as required or desired for a particular design and desired end product. For example, a first preprocessing step may be performed at intake 108 by material cleaner 112, which removes particulate matter, grease, or other impurities from one or both sides of bulk material 106. Removal of such impurities may be desirable to maintain fine control over the subsequent punching and rewinding of formed material 126. In addition, intake 108 may include edge guide 114 to monitor and/or adjust the alignment of bulk material 106 with respect to punch and die assembly 104. Edge guide 114 maintains bulk material 106 in a desired spatial arrangement with respect to upper punch assembly 116 and lower die assembly 118 of punch and die assembly 104, even if bulk material 106 is unevenly wound upon material spool 102. Other preprocessing steps and/or apparatuses may be employed as required or desired for a particular application, such as for trimming bulk material 106 to a desired width, creating cuts or perforations at desired locations, printing upon material surfaces, or the like.

Upon exiting a downstream end of intake 108, bulk material 106 enters the upstream end of punch and die assembly 104. As used herein, an "upstream" direction is toward the source of bulk material 106 (e.g., material spool 102), while a "downstream" direction is opposed to the upstream direction and oriented toward the destination of formed material 126 (e.g., takeup reel 101). Production machine 100 generally moves materials 106, 126 in a downstream direction along feed direction D_{F} (Figs. 6 and 6A).

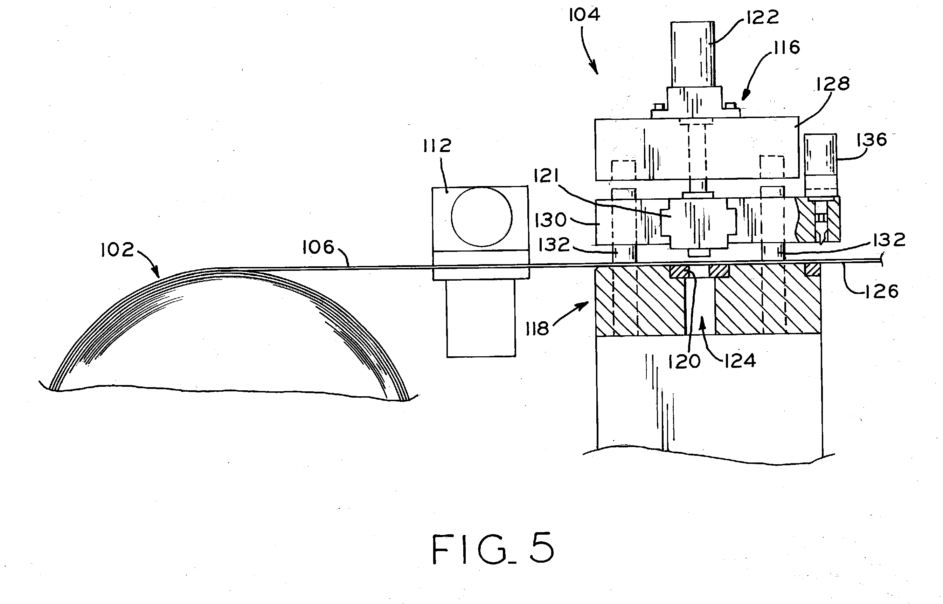

As best illustrated in Fig. 5, punch and die assembly 104 includes lower die assembly 118 having die insert 120 received therein. Upper punch assembly 116 includes upper punch 121 disposed above lower die assembly 118 and acted upon by press 122. When press 122 pushes upper punch assembly 116 downwardly, upper punch 121 engages die insert 120 to stamp out a predetermined shape from bulk material 106. When such stamping is complete, the removed material, known as a slug or blank, is allowed to fall away from material 106 via chute 124 formed in lower die assembly 118, while formed material 126 advances toward rewinder 110 as described further below. In the illustrated embodiment of Fig. 5, upper punch assembly 116 includes press plate 128 and die holder 130, with press plate 128 selectively actuating under the force of press 122 upon command from controller 145 (Fig. 4). Die holder 130 is guided along guide rails 132 as holder 130 is urged downwardly by press plate 128. Guide rails 132, in turn, are received within lower die assembly 118, thereby ensuring proper alignment between upper punch and lower die assemblies 116, 118 during the punching process.

Turning now to Fig. 6, a plan view of punch and die assembly 104 illustrates a transversely movable functionality of upper punch and lower die assemblies 116, 118 (though only lower die assembly 118 is shown for clarity). This transverse movement functionality enables variable widths W₁ through W₅ of winding slot cutouts 150 at selected layers of article 10 (e.g., innermost and outermost layers 12, 14), and thereby enables winding slots 20 with stair-step, "rounded" edges as described herein. Alternatively, Fig. 6A illustrates a plan view of punch and die assembly 204 which utilizes a movement profile of upper punch and lower die assemblies 216, 218 along a movement direction that is aligned, or parallel to the movement of material strip 106. As further described below, this aligned motion profile also enables variable widths W₁ through W₅ of winding slot cutouts 150, while presenting a narrower overall machine width suitable in some punch press operations.

Turning back to Fig. 6, lower die 118 has a plurality of die inserts 120 of varying widths W₁, W₂, W₃, W₄, W₅ that are transversely movable along direction D_{T}, which runs transverse to feed direction Dp of bulk and formed materials 106, 126. As described in further detail below, upper punch and lower die assemblies 116, 118 are advanced transversely along direction D_{T} by actuator 134 at the beginning and end stages of the formation of wound article 10, such that relatively wider punches and dies are employed for the first several innermost and last several outermost layers (including innermost layer 12 and outermost layer 14, respectively) to produce the progressively widening profile of winding slot 20 at the terminal radial ends thereof. This progressively widening profile, in turn, creates the radiused or rounded appearance of such axial ends to protect winding wire 28 (Fig. 2) and other adjacent winding materials. Upper punch and lower die assemblies 216, 218 achieve the same result, except with an aligned motion profile as detailed below.

One exemplary system and method for transversely moving a die station with respect to other adjacent structures is disclosed in U.S. Patent No. 6,742,239, filed October 1, 2002 and entitled PROGRESSIVE STAMPING DIE ASSEMBLY HAVING TRANSVERSELY MOVABLE DIE STATION AND METHOD OF MANUFACTURING A STACK OF LAMINAE THEREWITH, the entire disclosure of which is hereby expressly incorporated by reference herein. Particular structures and systems for providing motive force to move upper punch and lower die assemblies 116, 118 may be arranged similarly to the system of U.S. Patent No. 6,742,239, or may be differently arranged (i.e., hydraulically or pneumatically driven systems, manual slides, and the like).

Turning back to Fig. 5, punch and die assembly 104 may optionally include pin punch 136, which is configured and positioned to place pin hole 138 (Fig. 8C) into a leading edge of formed material 126. Pin hole 138 is sized and positioned to engage a correspondingly formed pin (not shown) in takeup reel 101 upon initial engagement therebetween, such that the engagement draws formed material 126 into the initial wrap around takeup reel 101 (thereby forming radially innermost layer 12).

Turning again to Fig. 6, lower die assembly 118 may include weld apertures 140, which are engaged by a correspondingly formed weld aperture punch (not shown) in upper punch assembly 116 to form weld slot notches 142 in formed material 126 at selected, periodically spaced locations along bulk material 106. Weld slot notches 142 cooperate to form weld slots 34 (Fig. 3) after article 10 is wound around takeup reel 101 as described in detail below.

As best seen in Fig. 4, the downstream end of production machine 100 includes rewinder 110 having takeup reel 101 and material measurement device 144. Measurement device 144 measures the distance between itself and the material being collected upon takeup reel 101, such as via sonar measurement, laser measurement, or the like. Signals collected from measurement device 144, which are indicative of the measured distance between device 144 and the adjacent layer of formed material 126, are relayed to controller 145, which is operably connected to takeup reel 101.

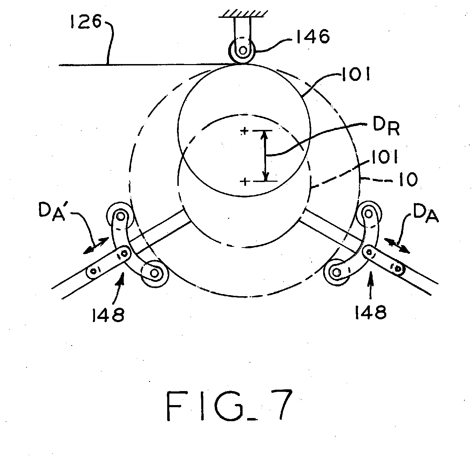

Turning to Fig. 7, controller 145 activates takeup reel 101 when formed material 126 is received thereupon. Takeup reel 101 is initially in an upper position directly abutting a spatially fixed pressure roll 146. Formed material 126 is progressively wound and collected upon takeup reel 101, starting with radially innermost layer 12 and progressing with another layer for each 360 degree rotation of takeup reel 101. As this progressive build up of wound formed material 126 collects, takeup reel 101 moves downwardly along direction D_{R}. This downward movement may be controlled by controller 145 in response to the signal received from measurement device 144. More particularly, controller 145 seeks to maintain a constant measurement reading from measurement device 144 such that pressure roll 146 is always in light but firm abutting contact with the incoming stream of formed material 126.

To compensate for slight variations or inconsistencies in the downward travel of takeup reel 101, pressure roll 146 may have a slight give (e.g., provided by an internal spring preload) to maintain such constant pressure upon incoming formed material 126. In addition, auxiliary pressure roll assemblies 148 may be provided along the outer surface of takeup reel 101, as shown in Fig. 7. Auxiliary pressure roll assemblies 148 are movable along direction D_{A}, D_{A}' to maintain constant contact along the outer surface of the collected formed material 126. In an exemplary embodiment, auxiliary pressure roll assemblies 148 are spring loaded to provide constant pressure against the adjacent material. In the illustrated embodiment of Fig. 7, auxiliary pressure roll assemblies 148 are shown abutting the outer surface of laminated article 10 after collection of formed material 126 is complete.

The motive force for advancing materials 106, 126 may be provided by takeup reel 101, which "pulls" such material along direction D_{F} (Fig. 6). However, the nominal angular rotation of reel 101 needed to effect a given linear advancement of materials 106, 126 along direction Dp changes depending on the diameter of the partially completed wound article 10. Controller 145 may perform the mathematical calculations to convert the angular rotations into linear distance based on the effective diameter of the partially finished article 10. Alternatively, a dedicated driven roller may be provided to advance materials 106, 126 by a set amount regardless of the rewind diameter.

A method of operation of production machine 100 to produce wound laminated article 10 will now be described with respect to punch and die assembly 104 (Figs. 4-6), it being understood that the operation of production machine 100 is identical when used with punch and die assembly 204 except as otherwise noted in the detailed description of the structure and operation of punch and die assembly 204.

As noted above, bulk material 106 is first provided from material spool 102 to punch and die assembly 104 via intake 108. Initially, punch and die assembly 104 is configured such that the widest die insert 120 and the associated widest punch 121 are aligned below and above bulk material 106. This configuration will allow radially innermost layer 12 to have winding slot cutout 150 (Fig. 8A) defining width W₅, which is the widest of all available widths in the present exemplary embodiment. The resulting wider width of winding slot 20 at the inner radial end thereof facilitates creation of the rounded edge (similar to the radially outward rounded edge shown in Fig. 2 and described further herein).

With bulk material 106 so aligned between upper punch and lower die assemblies 116, 118, punch and die assembly 104 is activated by controller 145 to create a first winding slot cutout 150 (Fig. 8A) defining width W₅. The next length of bulk material 106 is advanced into alignment with upper punch and lower die assemblies 116, 118, and the stamping process is repeated. In the present exemplary embodiment shown in Fig. 1, a total of twelve stamping procedures creates innermost layer 12 of article 10, because article 10 includes twelve winding slots 20. Of course, any number of winding slots 20 may be provided, and the initial punching processes utilizing relatively wider width W₅ can be replicated as many times as needed to correspond to the desired number of winding slots.

As noted above, bulk material 106 (and the newly finished formed material 126 as shown in Fig. 8A) is advanced by distance D_{A1} between punching of winding slot cutouts 150. Distance D_{A1} is calculated to produce twelve evenly spaced and evenly sized winding slot cutouts 150 around the inner periphery of radially innermost layer 12. Because this periphery is the smallest of any winding around article 10, inner pole pieces 16A (Figs. 1 and 8A) are relatively narrower than all other pole pieces 16 formed as a part of stator core 10.

For the next set of twelve winding slot cutouts 150, upper punch and lower die assemblies 116, 118 are indexed along direction D_{T} (Fig. 6) to the next set of die insert 120 and punch 121 having width W₄, which is slightly smaller than width W₅ described above to define a width difference therebetween. i.e., W₅ - W₄. For the second innermost layer of article 10, another set of twelve winding slot cutouts 150 are punched with the reduced width W₄ and taken up on takeup reel 101 over innermost layer 12. As described in detail below with respect to outermost layer 14 and the associated outer layers 30, 32 *et seq*, (Fig. 2), this width reduction in winding slot cutouts 150 produces the beginning of the stair-step, generally radiused or rounded appearance of the innermost layers of article 10.

In addition, advancement of formed material 126 must now be along a distance slightly larger than distance D_{A1} (Fig. 8A) in order to maintain the alignment of winding slot 20 across this new layer. This is because the second layer including the second set of twelve winding slot cutouts 150 must circumnavigate not only the circumference of takeup reel 101, but also the additional circumference imparted by the presence of the radially innermost layer 12. Controller 145 calculates this incrementally larger distance based on the thickness of formed material 126 and increases the advancement distance accordingly.

In the illustrated embodiment of Fig. 6, five arrangements of die insert 120 and punch 121 are provided having five progressively smaller widths W₅, W₄, W₃, W₂, W₁. With each progressive set of twelve winding slot cutouts 150 (or however many may be provided in a full annular set of such cutouts for a given stator design), upper punch and lower die assemblies 116, 118 are advanced along direction D_{T} to present the next narrowest width as described above. In this manner, the first five layers wound around takeup reel 101, which become the five innermost layers of article 10, have progressively narrowing winding slot cutout widths W₅ through W₁. This progressive narrowing imparts a stair-step configuration that presents a generally radiused or rounded configuration at the innermost radial end of winding slots 20, similar to the radiused configuration at the outermost radial end shown in Fig. 2 and described in detail above.

Further, this progressive narrowing shown in Fig. 2 may be provided by varying widths W₅ through W₁ by separate, incremental amounts relative to one another. Stated another way, each neighboring pair of widths (i.e., any pair of widths having nominal values nearer to each other than to the other widths) may define a difference that is related to the corresponding differences between all the other neighboring pairs of widths. For example, if an increment of 0.6 mm is chosen for the difference between a neighboring pair of widths (e.g., widths W₅ and W₄), the difference between other neighboring pairs of widths may also be 0.6 mm, or may grow successively smaller (as illustrated in Fig. 2), or may grow progressively larger. If the neighboring pairs of widths are all the same, W₂ - W₁, W₃ - W₂, W₄ - W₃ will all also be approximately 0.6 mm. This "even variation" of the neighboring pairs of widths provides an even "stair-step" profile configuration along the sides that define each width, W₁-W₅, such that the "stairs" are all the same size. Alternatively, the configuration shown in Fig. 2 has a relatively large variation between W₅ and W₄, then progressively smaller variations between W₄ - W₃, W₃ - W₂, and W₂ - W₁ respectively. Any such variation may be used in accordance with the present disclosure, as required or desired for a particular application.

In order to maintain the illustrated constant width of winding slot 20 throughout the intermediate layers between the outer and inner "flared" layers, the die insert 120/punch 121 combination having width W₁ may be used repeatedly for as many layers as are desired. During this time, with each increase in circumference of article 10 resulting from the addition of another layer of formed material 126 taken up by takeup reel 101, the distance of advancement of material 126 along direction D_{F} is increased accordingly. By the time radially outermost layer 14 is ready for forming at punch and die assembly 104 and takeup by takeup reel 101, advancement distance D_{A2} (Fig. 8B) is needed between adjacent neighboring pairs of winding slot cutouts 150 to ensure alignment with cutout slots 20. D_{A2} is substantially larger than D_{A1}, as illustrated by comparison to Figs. 8A and 8B, and is the maximum advancement distance for article 10.

In addition, the final, outermost five layers wound of formed material 126' around article 10 may employ ever increasing widths W₁, W₂, W₃, W₄, W₅ of winding slot cutouts 150, as shown in Fig. 2. This is accomplished by advancing upper punch assembly 116 and lower die assembly 118 along direction D_{T}, in the reverse order as was used for the five innermost layers described above. In Fig. 2, the third from outermost layer 32, second from outermost layer 30 and radially outermost layer 14 are shown for clarity, it being understood that the two layers further inward (i.e., the fourth outermost layer and fifth outermost layer) define winding slot cutouts 150 having widths W₂ and W₁, respectively. As illustrated, outer layer 32 defines width W₃, because winding slot cutouts 150 were created by the die insert 120/ punch 121 combination defining width W₃. Similarly, outer layer 30 defines width W₄ and radially outermost layer 14 defines the widest available width, width W₅. This arrangement of steadily increasing widths W₁ through W₅ creates the stair-step, "radiused" or "rounded" appearance at the radially outward axial ends of winding slots 20 as shown in Fig. 2.

The timing and amount of advancement of materials 106, 126, as well as the actuation of punch and die assembly 104 and any structures provided in intake 108 are controlled and monitored by controller 145. Further detail on an exemplary system and method from control over punch presses made in accordance with the present disclosure is presented below, in the context of punch and die assembly 204 (it being understood that punch and die assembly 104 may have similar systems and functions). Controller 145 is programmed to steadily increase the advancement distance from D_{A1} at the beginning of the winding process to D_{A2} at the end of the winding process in order to maintain radial continuity of winding slots 20 as described in detail above.

Controller 145 is also programmed to halt the advance of materials 106, 126 by stopping the driven advancement of takeup reel 101 (or other powered roller), in order to actuate punch and die assembly 104 to create winding slot cutout 150, pin hole 138, and/or weld slot notch 142. Edge guide 114 is actuated as necessary by controller 145, or by its own internal controller, to maintain the spatial relationship of bulk material 106 with respect to punch and die assembly 104, as noted above. Controller 145 may further monitor the status and operation of material cleaner 112 to ensure proper operation thereof, together with any other systems which may be chosen for intake 108, material spool 102, or the other systems of production machine 100.

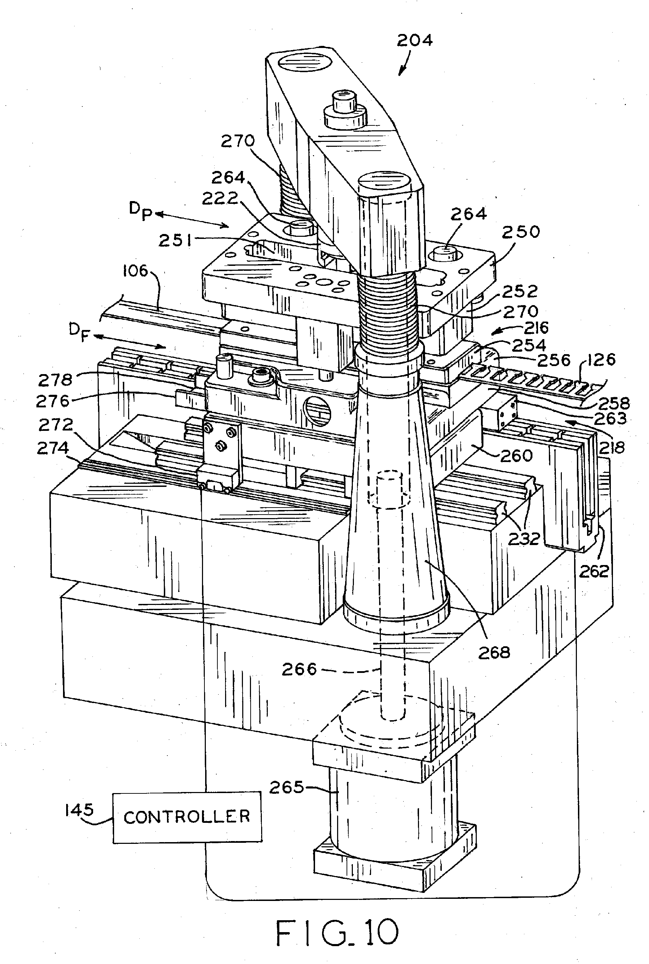

Movement of lower die 118 along direction D_{T}, which is transverse to feed direction D_{F} of bulk and formed materials 106, 126, is one exemplary method of producing stator core 10 as described above and shown in Fig. 6. However, it is contemplated that other movement profiles of the punch and die assembly may be used in accordance with the present disclosure. Referring to Fig. 6A, an alternative punch and die assembly is shown in which upper assembly 216 (Fig. 10) and lower assembly 218 move along direction D_{P}, which is aligned with and generally parallel to feed direction Dp of materials 106, 126. Punch and die assembly 204, which includes punch and die assemblies 216, 218 and various associated structures and mechanisms, are designed to operate a substantially similar fashion in conjunction with production machine 100. For example, a mechanism such as takeup reel 101 (Fig. 7) may provide the motive force for advancing materials 106, 126 along direction Dp in similar fashion as described above. Moreover, the unwinding, advancement and rewinding of materials 106, 126 is substantially the same when used with punch and die assembly 204 as it is for punch and die assembly 104, described above. Generally speaking, structures of punch and die assembly 204 are analogous to structures of punch and die assembly 104, except with 100 added thereto. The overall structure, function and operation of punch and die assembly 204 is similar to punch and die assembly 104 described above, except as stated otherwise herein.

Referring to Fig. 10, punch and die assembly 204 is configured so that lower die assembly 218 defines movement aligned with (e.g. parallel and along) feed direction D_{F} of materials 106, 126. Punch and die assembly 204, which includes upper assembly 216 and lower assembly 218, is narrow and compact by virtue of the parallel movement between both assemblies and materials 106, 126. In the illustrated embodiment, this compactness allows upper punch and lower die assemblies 216, 218 to be mounted in a space with tight constraints on width, e.g., between pillars 268 used for motive force in the punching process. For example, cylinder 265 may actuate actuator rod 266, which then pulls downwardly so that press 222 drives a selected punch assembly 291, 292, 293, 294 or 295 (described further below) to punch the desired blank or slug from material 106 in similar fashion to punch and die assembly 104 described above. Actuation of punch and die assemblies 104 or 204 can be accomplished by any suitable method, such by hydraulic or pneumatic actuators, for example. In addition, punch and die assemblies 104 or 204 may include a camming bar which selectively enables or prevents engagement of press 222 with the respective punch assemblies 291-295. One exemplary such camming bar is described in U.S. Patent No. 7,600,312, filed July 12, 2005 and entitled DIE ASSEMBLY FOR MANUFACTURING LAMINA STACKS THAT INCLUDE FORMED FEATURES, the entire disclosure of which is hereby expressly incorporated herein by reference.

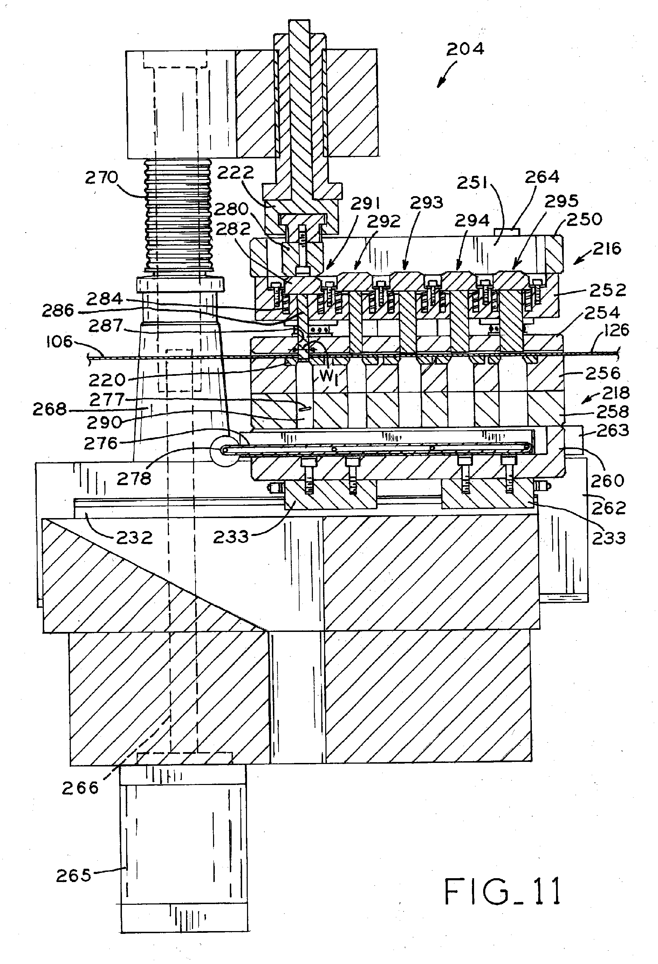

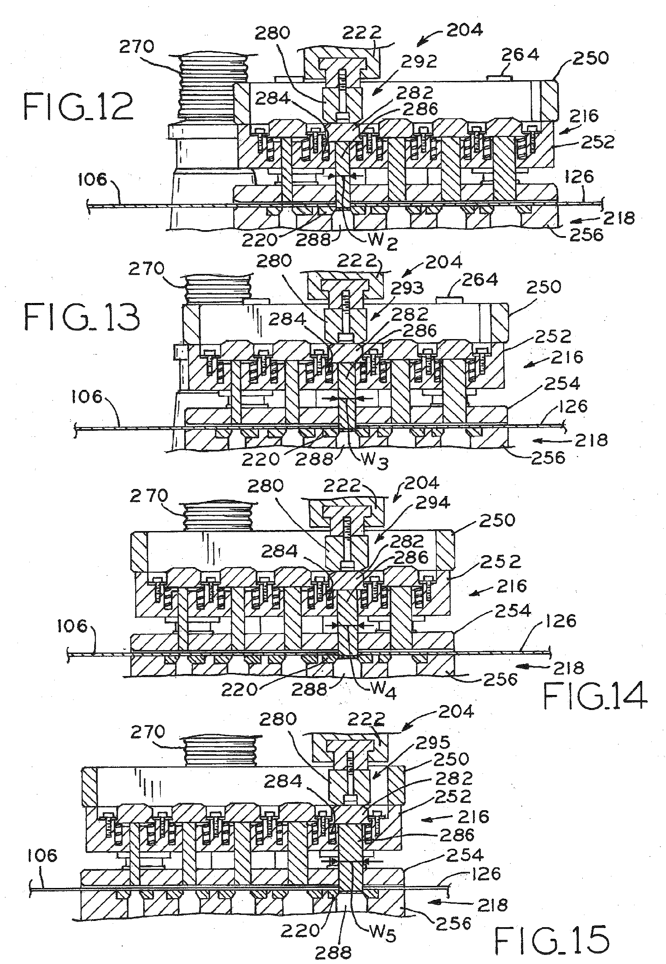

Referring to Fig. 11, upper assembly 216 includes three layered components fixed to one another. Cap block 250 includes press channel 251, which facilitates the linear movement of upper assembly 216 (and lower assembly 218) along direction Dp relative to press 222. More particularly, press 222 remains stationary and moves through channel 251 as assemblies 216, 218 are adjusted to engage press 222 with a selected die size, as shown in Figs. 12-15 and further described below. Cap block 250 is aligned with upper punch block 252 via guide pins 264. Upper punch block 252, in turn, carries punches 291, 292, 293, 294 or 295 of varying sizes used to punch cutouts 150 in material 106 as described above with respect to punch 104. Lower punch block 254 forms an upper guide structure for punches 291-295, with slots 287 that are sized and dimensioned substantially similarly to punch bodies 286 so that punch bodies 286 can be accommodated and inserted in slots 287. Lower punch block 254 also cooperates with die block 256 of lower die assembly 218 (described below) to guide and clamp material 106, 126 as it is advanced and retained during operation of punch and die assembly 204.

Lower assembly 218 also includes three layered components fixed to one another. Die block 256 forms a lower guide and clamping structure for material 106, 126, as noted above, and includes dies 220 of varying sizes into which a correspondingly sized punch body 286 is received to punch cutouts 150 into material 106, 126. Like lower die 118, described above, the plurality of die inserts 220 and punch bodies 286 define varying widths W₁, W₂, W₃, W₄, W₅ for creation of cutouts 150 having corresponding widths selectively chosen as desired for production of stator core 10.

Channel block 258 of lower die assembly 218 includes chutes 290 formed therein and sized to receive slugs 277 having various widths W₁, W₂, W₃, W₄, W₅. Slug 277 after being punched from material 106 to form a respective cutout 150, falls downwardly for disposal and evacuation via conveyor 278 as further described below. Guide block 260 forms the bottom layer of lower die assembly 218, and has four alignment guides 233 mounted thereto which are slidingly received on alignment rails 232. Alignment guides 233 cooperate with rails 232 to constrain motion of upper and lower assemblies 216, 218 along direction Dp while preventing any significant or appreciable lateral shift and maintaining linear stability.

Referring back to Fig. 10, linear motor 262 is included in punch and die assembly 204 to provide motive force for movement of upper and lower assemblies 216, 218 along direction Dp. Specifically, linear motor 262 drives driven block 263, such as by pneumatic, hydraulic or electrical operation. Driven block 263 is positioned beneath, and attached to channel block 258, and may also be attached to a side surface of guide block 260. As linear motor 262 drives driven block 263 along the longitudinal extent of motor 262, the corresponding movement of guide block 260 transfers such movement to both lower assembly 218 and upper assembly 216, in turn adjusting which among the various punch assemblies 291-295 engages press 222 and operates on material 106.

Referring to Fig. 11, the illustrated exemplary embodiment of punch and die assembly 204 includes five punch assemblies 291, 292, 293, 294, 295, similar to punch and die assembly 104 described above. As noted above, upper punch block 252 carries these five separate punch assemblies 291-295. As assemblies 216, 218 move in direction D_{P}, different punch assemblies 291-295 respectively move into and out of alignment with press 222. When in alignment, one of punch assemblies 291-295 is aligned with and positioned beneath press head 280 of press 222. Press head 280 is sized to be received within press channel 251 in block 250 to facilitate their linear movement of assemblies 216, 218 in direction D_{P} when punch and die assembly 204 is in operation and a transition between the various punch assemblies 291-295 is desired.

Referring specifically to punch assembly 291 as shown in Fig. 11, this leftmost punch assembly is shown in an engaged state with press head 280 urging punch assembly 291 into a punching orientation. Punch body 286 is affixed to punch head 282 and is partially housed in upper punch block 252 and partially housed in lower punch block 254. When punch head 282 is engaged by press head 280, punch body 286 is forced downwardly into engagement with material 106 to punch cutout 150. After passing through material 106, punch body 286 partially enters the hollow cavity of die insert 220 in die block 256, also pushing slug 277 downwardly into chute 290. Chute 290, which is aligned with die insert 220, allows for slug 277 (the piece of material that has been punched from material 106) to fall downward into tray 276. Slot 287, die insert 220, and chute 290 define a continuous, vertical channel through lower assembly 218 to facilitate this material stamping and waste removal process.

Punch head 282 is acted upon by punch springs 284, which bias punch assembly 291 upwardly into a disengaged state so that after press head 280 has impacted punch head 282 to create cutout 150, the lower end of punch body 286 automatically retracts away from engagement with the feed path of material 106. When so disengaged, material 106 may advance along direction Dp to initiate the next punch process.

Tray 276 is affixed to guide block 260 and extends beneath all five chutes 290. This arrangement facilitates the easy removal of slugs 277 from punch and die assembly 204 after they have been punched from material 106. Tray 276 is positioned so that it can catch slugs 277 that have fallen through any one of chutes 290. In an exemplary embodiment, tray 276 is configured with conveyor 278, which can transport slugs 277 from guide block 260 to an external location (not shown) for subsequent disposal or recycling. Conveyor 278 may be a standard type commercially available, such as a vibratory- or low-profile belt-type conveyor. One exemplary vibratory-type conveyor useable with punch and die assembly 204 is the Model 250 conveyor manufactured by Vibro Industries, Inc. One exemplary low-profile belt-type conveyor is the 6200 series low-profile belt conveyor manufactured by Dorner® Manufacturing Corp.

The punching process of punch and die assembly 204 is accomplished by actuating press 222 downward through channel 251 while upper assembly 216 and lower assembly 218 remain stationary. As noted above, cylinder 265 pulls actuator rod 266 downward, (optionally compressing dust boot 270), so that press 222 descends and press head 280 engages one of punch assemblies 291-295 to punch out a cutout 150 of predetermined shape from material 106. To change the width and/or size of cutout 150, a different punch assembly 291, 292, 293, 294, 295 and its associated die insert 220 is aligned with press 222 by advancing upper punch and lower die assemblies 116, 118 along direction Dp. For example, as described in detail above with respect to punch and die assembly 104, punches 291-295 defining differing widths W₁-W₅ may be used at the beginning and end stages of producing of wound article 10 (Fig. 1). As in the previously described embodiment, relatively wider punches and dies are employed for the first several innermost and last several outermost layers (including innermost layer 12 and outermost layer 14, respectively, as shown in Fig. 2) to produce the progressively widening profile of winding slot 20 at the terminal radial ends thereof.

While the above description describes the structure and operation of punch and die assembly 204 with respect to punch assembly 291, the structure and operation of each of the four other punch assemblies in Fig. 11 is substantially identical. However, similar to punch and die assembly 104, each other punch assembly 292, 293, 294, 295 defines a progressively wider punch width W₂, W₃, W₄, W₅ respectively.

In general, Figs. 12-15 show the transition from engagement of the leftmost (and narrowest) punch assembly 291 and insert 220, to the use of the rightmost (and widest) punch assembly 295 and insert 220. Figs. 12-15 serially illustrate an example of how the last five outermost layers of wound article 10 (Fig. 1) would be produced using punch and die assembly 204. More particularly, the progression of Figs. 11-15 depicts a transition from the narrowest cutout width W₁ to the widest cutout width W₅, which is the progression needed for the widening slot width used for the radially outward end of slots 20 as described above. Of course, it is contemplated that a reversed progression (i.e., from Fig. 15 to Fig. 11) is used to create the progressively narrowing slot width at the radially inward end of slot 20 at the beginning of production of article 10.

Fig. 11 shows press 222 aligned with and directly above punch assembly 291 so that it has engaged punch assembly 291 to actuate punch body 286 downwardly and stamp a predetermined shape from material 106, as described above. Specifically, when press head 280 impacts punch head 282 of punch assembly 291, punch body 286 penetrates material 106 through leftmost and narrowest die insert 220 having width W₁. Slug 277 descends through die insert 220 and chute 290 and lands on tray 276 so that it may be transported away via conveyor 278.

To create the exemplary embodiment of stator core 10 shown in Fig. 1, this process is repeated as many additional times as needed to build up the intermediate winding layers of core 10. For each layer (including the fifth outer-most layer), twelve evenly spaced and evenly sized winding slot cutouts 150 are formed in material 126 (Fig. 6A).

Figs. 12-15 show how slot cutouts 150 are formed for each of the last four outermost layers of wound article 10 (Fig. 1). Press 222 is aligned with and engages a given punch assembly 292-295 once upper and lower assemblies 216 and 218 are incrementally shifted leftward. Twelve evenly spaced and evenly sized winding slot cutouts 150 are formed in material 126 using each of punch assemblies 292-295, similar to the process described above using punch assembly 291. More specifically, in the illustrated exemplary embodiment of Figs. 12, 15, punch assembly 292 corresponds with width W₂, punch assembly 293 corresponds with width W₃, punch assembly 294 corresponds with width W₄, and punch assembly 295 corresponds with width W₅.

For this embodiment, as in the previous embodiment, bulk material 106 is advanced by distance D_{A1} (Fig. 8A) between punching of winding slot cutouts 150 for the first radially inward layer. Likewise, as in the earlier embodiment, bulk material 106 is advanced by distance D_{A2} (Fig. 8B) for the final radially outward layer. In short, referring to Figs. 8A and 8B, in this embodiment, as in the previous one, the widths of pole pieces 16A are narrower because the circumference of wound article 10 is less for the radially inward layers and the widths of pole pieces 16B are wider because the circumference of wound article 10 is greater for the radially outward layers. Distances D_{A1} and D_{A2} are calculated to produce twelve evenly spaced and evenly sized winding slot cutouts 150 which align to create slots 20.

Like the previous embodiment, as takeup reel 101 (Fig. 4) pulls material 106, 126 along direction D_{F}, controller 145 calculates the required angular movement of reel 101 needed to effect a given linear advancement of materials 106, 126 along direction D_{F} depending on the diameter of the partially completed wound article 10. Depending on how much material has been wound and how much remains to be wound for a given design of article 10, controller 145 may issue a command to switch between punch assemblies 291-295.

When this "switch punch assembly" command is issued, controller 145 activates linear motor 262 to shift driven block 263 (and, therefore, upper punch and lower die assemblies 216, 218) along a desired direction (i.e., along direction Dp). The distance of this shift is determined by the distance between the punch assembly 291-295 that was previously aligned with punch press 222 and the punch assembly 291-295 that is desired to be aligned with punch press 222. To measure the movement of upper and lower assemblies 216, 218 as motor 262 moves, encoder 272 is provided. Encoder 272 rides along encoder track 274, providing linear advancement information indicative of the movement and distance traveled of assemblies 216, 218. This linear advancement information is then relayed to controller 145, which in maintains or halts the movement of linear motor 262 to achieve the desired location of assemblies 216, 218. In short, controller 145 can control the linear advancement of both assemblies 216, 218 along direction Dp, and of material 106, 126 along direction Dp, so that the correct punch assembly is engaged by press 222 for a given stage of the winding process of wound article 10.

For example, as punch and die assembly 204 is stamping slot cutouts 150 for innermost layer 12 during the earliest stage of the linear advancement of materials 106, 126, assemblies 216, 218 are positioned such that press 222 engages punch assembly 295 to use die insert 220 having the widest width W₅ (Fig. 15). Alternatively, when punch and die assembly 204 is stamping slot cutouts for intermediate layers, based on the linear advancement to that point of materials 106, 126, assemblies 216, 218 will engage punch assembly 291 to use die insert 220 having the narrowest width W₁ (Fig. 11). In the layers between the intermediate layers and the innermost or outermost layers 12, 14 of article 10, punch and die assembly 204 operates to advance assemblies 216, 218 to the appropriate intermediate punch assemblies 292-294 (Figs. 12-14 respectively). Encoder 272, linear motor 262, measurement device 144 and possibly other devices (described above) all relay information to controller 145, which in turn controls the location of assemblies 216, 218 and the advancement of materials 106, 126 to accurately and efficiently form finished article 10.

When radially outermost layer 14 is complete and wound upon article 10, formed material 126' may be severed and the process may restart by again beginning creation of formed material 126, as illustrated in Fig. 8B. In this way, continuous material processing may take place without any substantial interruption. Laminated article 10 may be removed from takeup reel 101, and fixed in its finished form by welding the various layers of formed material 126, 126' to one another by welding along weld slots 34.

While this invention has been described as having an exemplary design, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A stator core (10) comprising:
a central opening (22) bounded at its periphery by an innermost layer (12) having at least one innermost winding slot cutout (150) defining an innermost cutout width (W₅);
an outermost layer (14) radially spaced from said innermost layer and having at least one outermost winding slot cutout (150) defining an outermost cutout width (W₅); and
a main stator body comprising a plurality of intermediate layers between said innermost layer and said outermost layer, each of said plurality of intermediate layers having at least one intermediate winding slot cutout (150) defining an intermediate cutout width (W₁),
said innermost layer, said outermost layer and said intermediate layers formed from a continuous strip of wound material (126) such that said innermost winding slot cutout, said outermost winding slot cutout and said intermediate winding slot cutouts are respectively aligned with one another to form a winding slot (20), and
**characterized in that**:
at least one of said innermost cutout width and said outermost cutout width is larger than said intermediate cutout width, whereby said winding slot defines a stair-step profile approximating a rounded edge at at least one radial end of said winding slot.

2. The stator core (10) of Claim 1, **characterized in that**:
said innermost cutout width (W₅) is larger than said intermediate cutout width (W₁); and
said outermost cutout width (W₅) is larger than said intermediate width (W₁),
such that each radial end of said winding slot (20) defines said stair-step profile approximating a rounded edge.

3. The stator core (10) of Claim 1, **characterized by** a plurality of outer layers disposed between said outermost layer and said plurality of intermediate layers, **characterized in that**:
each of said plurality of outer layers (30, 32) respectively define a plurality of outer cutouts (150) aligned with and forming a portion of said winding slot (20), and
said plurality of outer cutouts defining progressively smaller outer cutout sizes (W₄, W₃, W₂) as said plurality of outer layers progresses radially inwardly, such that said stair-step profile more closely approximates a rounded edge at the radial outer end of said winding slot.

4. The stator core (10) of Claim 3, wherein a width difference between neighboring pairs of said outer cutouts (150) along said winding slot (20) is one of:
progressively smaller than a corresponding width difference between each other neighboring pair of said outer cutouts;
progressively larger than a corresponding width difference between each other neighboring pair of said outer cutouts; and
substantially equal to a corresponding width difference between each other neighboring pair of said outer cutouts.

5. The stator core (10) of Claim 1, further comprising a plurality of inner layers disposed between said innermost layer (12) and said plurality of intermediate layers, wherein:
each of said plurality of inner layers respectively defining a plurality of inner cutouts (150) aligned with and forming a portion of said winding slot (20), and
said plurality of inner cutouts defining progressively smaller inner cutout sizes (W₄, W₃, W₂) as said plurality of inner layers progresses radially outwardly, such that said stair-step profile more closely approximates a rounded edge at the radial inner end of said winding slot.

6. The stator core (10) of Claim 5, wherein a width difference between neighboring pairs of said inner cutouts (150) along said winding slot (20) is one of:
progressively smaller than a corresponding width difference between each other neighboring pair of said outer cutouts;
progressively larger than a corresponding width difference between each other neighboring pair of said outer cutouts; and
substantially equal to a corresponding width difference between each other neighboring pair of said outer cutouts.

7. The stator core (10) of Claim 1, wherein said innermost cutout width (W₅) and said outermost cutout width (W₅) are both larger than said intermediate cutout width (W₁), whereby said winding slot (20) defines a stair-step profile approximating a rounded edge at both an inner and outer radial ends of said winding slot.

8. The stator core (10) of Claim 1, wherein said innermost winding slot cutout (150), said outermost winding slot cutout (150) and said intermediate winding slot cutouts (150) each define a cutout geometry substantially equivalent to one another, whereby sidewalls at respective sides of each said cutout have a corresponding sidewall profile.

9. A production machine (100) for producing the stator core (10) of Claim 1, the machine comprising:
a punch and die assembly (104) comprising:
an upper punch assembly (116) comprising a plurality of punches (291-295) longitudinally arranged with respect to one another along a first direction;
a lower die assembly (118) configured to cooperate with said plurality of punches of said upper punch assembly to punch a plurality of lamina features into a strip of material (106), said lamina features substantially within the plane of the strip of material;
a material feed path passing between the upper punch assembly and the lower die assembly, such that the plurality of punches are selectively engageable with the material feed path to selectively punch one of the plurality of lamina features into the strip of material as the strip of material moves along a material feed path direction (Dp);
a rewinding apparatus (110) positioned downstream of said punch and die assembly, said rewinding apparatus rotatable to take up material (126) from said material feed path after the lamina features are punched into the strip of material.

10. The production machine (100) of Claim 9, wherein said first direction (D_{T}) is transverse to said material feed path direction (D_{F}).

11. The production machine (100) of Claim 9, wherein said first direction (Dp) is aligned with said material feed path direction (D_{F}).

12. The production machine (100) of Claim 9, wherein each punch of said plurality of punches (291-295) is sized differently from every other punch in said plurality of punches.

13. The production machine (100) of Claim 12, wherein said plurality of punches respectively define said innermost cutout width (W₅), said outermost cutout width (W₅), and said intermediate cutout width (W₁).

14. The production machine (100) of Claim 13, wherein a difference between each neighboring pair of widths is one of:
progressively smaller than a corresponding difference between each other neighboring pair of said widths;
progressively larger than a corresponding difference between each other neighboring pair of said widths; and
substantially equal to a corresponding difference between each other neighboring pair of said widths.

15. The production machine (100) of Claim 13, wherein each said width is defined by a respective pair of opposing die sides of a plurality of dies (220), each said pair of opposing die sides defining a cutout profile substantially equivalent to a corresponding cutout profile defined by each other said pair of opposing die sides.

## Patentansprüche

1. Statorkern (10)
mit einer mittigen Ausnehmung (22), die an ihrem Rand durch eine innerste Lage (12) begrenzt ist, die wenigstens eine innerste Wicklungsschlitzaussparung (150) aufweist, welche mit einer innersten Aussparungsbreite (W₅) ausgebildet ist,
mit einer äußersten Lage (14), die von der innersten Lage radial beabstandet ist und wenigstens eine äußerste Wicklungsschlitzaussparung (150) aufweist, die mit einer äußersten Aussparungsbreite (W₅) ausgebildet ist, und
mit einem Hauptstatorkörper, der eine Anzahl von zwischenliegenden Lagen zwischen der innersten Lage und der äußersten Lage umfasst, wobei jede der Anzahl von zwischenliegenden Lagen wenigstens eine zwischenliegende Wicklungsschlitzaussparung (150) aufweist, die mit einer zwischenliegenden Aussparungsbreite (W₁) ausgebildet ist,
wobei die innerste Lage, die äußerste Lage und die zwischenliegenden Lagen aus einem durchgehenden Streifen eines gewickelten Materials (126) derart herausgebildet sind, dass die innerste Wicklungsschlitzaussparung, die äußerste Wicklungsschlitzaussparung und die zwischenliegenden Wicklungsschlitzaussparungen in Bezug aufeinander ausgerichtet sind, um einen Wicklungsschlitz (20) auszubilden,
**dadurch gekennzeichnet, dass**
wenigstens eine innenliegende Aussparungsbreite und/oder eine äußerste Aussparungsbreite größer als die zwischenliegende Aussparungsbreite ist, so dass der Wicklungsschlitz ein treppenstufenartiges Profil ausbildet, das an wenigstens einem radialen Ende des Wicklungsschlitzes einer abgerundeten Kante angenähert ist.

2. Statorkern (10) nach Anspruch 1, **dadurch gekennzeichnet,**
**dass** die innerste Aussparungsbreite (W₅) größer als die zwischenliegende Aussparungsbreite (W₁) ist und
**dass** die äußerste Aussparungsbreite (W₅) größer als die zwischenliegende Aussparungsbreite (W₁) ist,
so dass jedes radiale Ende des Wicklungsschlitzes (20) mit einem treppenstufenartigen Profil ausgebildet ist, das einer abgerundeten Kante angenähert ist.

3. Statorkern (10) nach Anspruch 1, **dadurch gekennzeichnet, dass** eine Anzahl von äußeren Lagen zwischen der äußersten Lage und der Anzahl von zwischenliegenden Lagen angeordnet ist, die **dadurch gekennzeichnet sind,**
**dass** jede der Anzahl von äußeren Lagen (30, 32) jeweils eine Anzahl von äußeren Aussparungen (150) ausbilden, die mit dem Wicklungsschlitz (20) ausgerichtet sind und einen Teil davon bilden, und
**dass** die Anzahl von äußeren Aussparungen zunehmend kleinere äußere Aussparungsbreiten (W₄, W₃, W₂) bei Zunahme der äußeren Lagen nach radial innen ausbilden, so dass das treppenstufenartige Profil näher an eine abgerundete Kante an dem radial äußeren Ende des Wicklungsschlitzes angenähert ist.

4. Statorkern (10) nach Anspruch 3, wobei der Breitenunterschied zwischen benachbarten Paaren von äußeren Aussparungen (150) entlang des Wicklungsschlitzes (20) entweder
zunehmend kleiner als ein zugeordneter Breitenunterschied zwischen jedem anderen benachbarten Paar an äußeren Aussparungen,
zunehmend größer als ein zugeordneter Breitenunterschied zwischen jedem anderen benachbarten Paar von äußeren Aussparungen oder
im Wesentlichen gleich einem zugeordneten Breitenunterschied zwischen jedem anderen benachbarten Paar von äußeren Aussparungen ist.

5. Statorkern (10) nach Anspruch 1, der weiterhin über eine Anzahl von inneren Lagen zwischen der innersten Lage (12) und der Anzahl von zwischenliegenden Lagen angeordnet ist, wobei
jede der Anzahl von inneren Lagen jeweils eine Anzahl von inneren Aussparungen (150) ausbilden, die mit dem Wicklungsschlitz (20) ausgerichtet sind und einen Teil davon bilden, und
die Anzahl von inneren Aussparungen zunehmend kleinere innere Aussparungsbreiten (W₄, W₃, W₂) bei Zunahme der inneren Lagen nach radial innen ausbilden, so dass das treppenstufenartige Profil näher an eine abgerundete Kante an dem radial inneren Ende des Wicklungsschlitzes angenähert ist.

6. Statorkern (10) nach Anspruch 5, wobei der Breitenunterschied zwischen benachbarten Paaren von inneren Aussparungen (150) entlang des Wicklungsschlitzes (20) entweder
zunehmend kleiner als ein zugeordneter Breitenunterschied zwischen jedem anderen benachbarten Paar an äußeren Aussparungen,
zunehmend größer als ein zugeordneter Breitenunterschied zwischen jedem anderen benachbarten Paar von äußeren Aussparungen oder
im Wesentlichen gleich einem zugeordneten Breitenunterschied zwischen jedem anderen benachbarten Paar von äußeren Aussparungen ist.

7. Statorkern (10) nach Anspruch 1, bei dem die innerste Aussparungsbreite (W₅) und die äußerste Aussparungsbreite (W₅) beide größer als die zwischenliegende Aussparungsbreite (W₁) sind, wobei der Wicklungsschlitz (20) mit einem treppenstufenartigen Profil ausgebildet ist, das sowohl an dem inneren als auch an dem äußeren radialen Ende des Wicklungsschlitzes einer abgerundeten Kante angenähert ist.

8. Statorkern (10) nach Anspruch 1, bei dem die innerste Wicklungsschlitzaussparung (150), die äußerste Wicklungsschlitzaussparung (150) und die zwischenliegenden Wicklungsschlitzaussparungen (150) jeweils eine Aussparungsgeometrie ausbilden, die zueinander äquivalent sind, wobei die Seitenwände an den betreffenden Seiten jeder Aussparung mit einem zugeordneten Seitenwandprofil ausgebildet sind.

9. Herstellungsmaschine (100) zum Herstellen des Statorkerns (10) nach Anspruch 1, wobei die Maschine
eine Stempel- und Matrizenanordnung (104)
mit einer oberen Stempelanordnung (116), die mit einer Anzahl von Stempeln (291-295) ausgestattet ist, die in Längsrichtung in Bezug aufeinander entlang einer ersten Richtung angeordnet sind,
mit einer unteren Matrizenanordnung (118), die dazu eingerichtet ist, mit der Anzahl an Stempeln der oberen Stempelanordnung zusammenzuwirken, um eine Anzahl von Schichtmerkmalen in einen Streifen an Material (106) zu stanzen, wobei die Schichtmerkmale im Wesentlichen in der Ebene des Streifens an Material liegen,
mit einem Materialzuführweg, der zwischen der oberen Stempelanordnung und der unteren Matrizenanordnung derart verläuft, dass die Anzahl an Stempeln wahlweise mit dem Materialzuführpfad in Eingriff bringbar sind, um wahlweise eines der Anzahl von Schichtmerkmalen in den Streifen an Material zu stanzen, wenn sich der Streifen an Material entlang einer Materialzuführwegrichtung (D_{F}) bewegt, und
eine Aufwickelvorrichtung (110) aufweist, die in Förderrichtung nach der Stempel- und Matrizenanordnung angeordnet ist, wobei die Aufwickelvorrichtung zur Aufnahme von Material (126) von dem Materialzuführweg nach Stanzen der Schichtmerkmale in den Streifen an Material drehbar ist.

10. Herstellungsmaschine (100) nach Anspruch 9, bei der die erste Richtung (D_{T}) quer/schräg zu der Materialzuführwegrichtung (D_{F}) ist.

11. Herstellungsmaschine (100) nach Anspruch 9, bei der die erste Richtung (D_{P}) mit der Materialzuführwegrichtung (D_{F}) ausgerichtet ist.

12. Herstellungsmaschine (100) nach Anspruch 9, bei der jeder Stempel der Anzahl von Stempeln (291-295) von jedem anderen Stempel der Anzahl von Stempeln unterschiedlich dimensioniert ist.

13. Herstellungsmaschine (100) nach Anspruch 12, bei der die Anzahl von Stempeln jeweils die innerste Aussparungsbreite (W₅), die äußerste Aussparungsbreite (W₅) und die zwischenliegende Aussparungsbreite (W₁) festlegen.

14. Herstellungsmaschine (100) nach Anspruch 13, bei der ein Unterschied zwischen benachbarten Paaren von Breiten entweder
zunehmend kleiner als ein zugeordneter Unterschied zwischen jedem anderen benachbarten Paar an Breiten,
zunehmend größer als ein zugeordneter Unterschied zwischen jedem anderen benachbarten Paar von Breiten oder
im Wesentlichen gleich einem zugeordneten Unterschied zwischen jedem anderen benachbarten Paar von Breiten ist.

15. Herstellungsmaschine (100) nach Anspruch 13, bei der jede Breite durch ein zugehöriges Paar von einander gegenüberliegenden Matrizenseiten einer Anzahl von Matrizen (220) festgelegt ist, wobei jedes Paar von einander gegenüberliegenden Matrizenseiten ein Aussparungsprofil festlegt, das im Wesentlichen äquivalent zu einem zugehörigen Aussparungsprofil ist, das durch jedes andere Paar von einander gegenüberliegenden Matrizenseiten festgelegt ist.

## Revendications

1. Un noyau de stator (10) comprenant:
une ouverture centrale (22) limitée à sa périphérie par une couche la plus interne (12) ayant au moins une découpe de rainure d'enroulement la plus interne (150) définissant une largeur de découpe la plus interne (W₅);
une couche la plus externe (14) espacée radialement de ladite couche la plus interne et ayant au moins une découpe de rainure d'enroulement la plus externe (150) définissant une largeur de découpe la plus externe (W₅); et
un corps de stator principal comprenant une pluralité de couches intermédiaires entre ladite couche la plus interne et ladite couche la plus externe, chacune de ladite pluralité de couches intermédiaires ayant au moins une découpe de rainure d'enroulement intermédiaire (150) définissant une largeur de découpe intermédiaire (W₁),
ladite couche la plus interne, ladite couche la plus externe et lesdites couches intermédiaires formées à partir d'une bande continue de matériau enroulé (126) de telle sorte que ladite découpe de rainure d'enroulement la plus interne, ladite découpe de rainure d'enroulement la plus externe et lesdites découpes de fentes d'enroulement intermédiaire sont respectivement alignées l'une avec l'autre pour former une rainure d'enroulement (20), et
**caractérisé en ce que**:
au moins l'une de ladite largeur de découpe la plus interne et de ladite largeur de découpe la plus externe est plus grande que ladite largeur de découpe intermédiaire, par laquelle ladite rainure d'enroulement définit un profil en marche d'escalier se rapprochant d'un bord arrondi à au moins une extrémité radiale de ladite rainure d'enroulement.

2. Le noyau de stator (10) selon la revendication 1, **caractérisé en ce que**:
ladite largeur de découpe la plus interne (W₅) est plus grande que ladite largeur de découpe intermédiaire (W₁); et
ladite largeur de découpe la plus externe (W₅) est plus grande que ladite largeur intermédiaire (W₁),
de sorte que chaque extrémité radiale de ladite rainure d'enroulement (20) définit ledit profil en marche d'escalier se rapprochant d'un bord arrondi.

3. Le noyau de stator (10) selon la revendication 1, **caractérisé par** une pluralité de couches externes disposées entre ladite couche la plus externe et ladite pluralité de couches intermédiaires, **caractérisé en ce que**:
chacune de ladite pluralité de couches externes (30, 32) définit respectivement une pluralité de découpes externes (150) alignées avec et formant une partie de ladite rainure d'enroulement (20), et
ladite pluralité de découpes externes définissant des dimensions de découpe externe progressivement plus petites (W₄, W₃, W₂) à mesure que ladite pluralité de couches externes progresse radialement vers l'intérieur, de telle sorte que ledit profil en marche d'escalier se rapproche plus étroitement d'un bord arrondi à l'extrémité radiale extérieure de ladite rainure d'enroulement.

4. Le noyau de stator (10) selon la revendication 3, dans lequel une différence de largeur entre des paires voisines desdites découpes externes (150) le long de ladite rainure d'enroulement (20) est l'une de:
progressivement plus petite qu'une différence de largeur correspondante entre chaque autre paire voisine desdites découpes externes;
progressivement plus grande qu'une différence de largeur correspondante entre chaque autre paire voisine desdites découpes externes; et
sensiblement égale à une différence de largeur correspondante entre chaque autre paire voisine desdites découpes externes.

5. Le noyau de stator (10) selon la revendication 1, comprenant en outre une pluralité de couches internes disposées entre ladite couche la plus interne (12) et ladite pluralité de couches intermédiaires, dans lequel:
chacune de ladite pluralité de couches internes définissant respectivement une pluralité de découpes internes (150) alignée avec et formant une partie de ladite rainure d'enroulement (20), et
ladite pluralité de découpes internes définissant des dimensions de découpe internes progressivement plus petites (W₄, W₃, W₂) à mesure que ladite pluralité de couches internes progresse radialement vers l'extérieur, de telle sorte que ledit profil en marche d'escalier se rapproche plus étroitement d'un bord arrondi à l'extrémité radiale intérieure de ladite rainure d'enroulement.

6. Le noyau de stator (10) selon la revendication 5, dans lequel une différence de largeur entre des paires voisines desdites découpes internes (150) le long de ladite rainure d'enroulement (20) est l'une de:
progressivement plus petite qu'une différence de largeur correspondante entre chaque autre paire voisine desdites découpes externes;
progressivement plus grande qu'une différence de largeur correspondante entre chaque autre paire voisine desdites découpes externes; et
sensiblement égale à une différence de largeur correspondante entre chaque autre paire voisine desdites découpes externes.

7. Le noyau de stator (10) selon la revendication 1, dans lequel ladite largeur de découpe la plus interne (W₅) et ladite largeur de découpe la plus externe (W₅) sont toutes deux plus grandes que ladite largeur de découpe intermédiaire (W₁), ladite rainure d'enroulement (20) définissant un profil en marche d'escalier se rapprochant d'un bord arrondi aux deux extrémités radiales intérieure et extérieure de ladite rainure d'enroulement.

8. Le noyau de stator (10) selon la revendication 1, dans lequel ladite découpe de rainure d'enroulement interne (150), ladite découpe de rainure d'enroulement externe (150) et lesdites découpes de rainure d'enroulement intermédiaire (150) définissent chacune une géométrie de découpe sensiblement équivalente l'une à l'autre, les parois latérales sur les côtés respectifs de chacune de ladite découpe ayant un profil de paroi latérale correspondant.

9. Une machine de production (100) pour produire le noyau de stator (10) selon la revendication 1, la machine comprenant:
un ensemble poinçon et matrice (104) comprenant:
un ensemble poinçon supérieur (116) comprenant une pluralité de poinçons (291-295) disposés longitudinalement les uns par rapport aux autres le long d'une première direction;
un ensemble de matrice inférieur (118) configuré pour coopérer avec ladite pluralité de poinçons dudit ensemble de poinçon supérieur pour poinçonner une pluralité d'éléments caractéristiques en feuille en une bande de matériau (106), ledit élément caractéristique en feuille étant sensiblement dans le plan de la bande de matériau;
un chemin d'alimentation en matériau passant entre l'ensemble de poinçon supérieur et l'ensemble de matrice inférieur, de telle sorte que la pluralité de poinçons peut s'engager sélectivement avec le chemin d'alimentation en matériau pour poinçonner sélectivement l'un de la pluralité d'éléments caractéristiques en feuille dans la bande de matériau lorsque la bande de matériau se déplace le long d'une direction du chemin d'alimentation en matériau (D_{F});
un appareil de rembobinage (110) positionné en aval dudit ensemble de poinçon et de matrice, ledit appareil de rembobinage pouvant tourner pour prendre le matériau (126) dudit chemin d'alimentation en matériau après que les éléments caractéristiques en feuille aient été poinçonnés dans la bande de matériau.

10. La machine de production (100) selon la revendication 9, dans laquelle ladite première direction (D_{T}) est transversale à ladite direction de chemin d'alimentation en matériau (D_{F}).

11. La machine de production (100) selon la revendication 9, dans laquelle ladite première direction (D_{P}) est alignée avec ladite direction de chemin d'alimentation en matériau (D_{F}).

12. La machine de production (100) selon la revendication 9, dans laquelle chaque poinçon de ladite pluralité de poinçons (291-295) est dimensionné différemment de chaque autre poinçon dans ladite pluralité de poinçons.

13. La machine de production (100) selon la revendication 12, dans laquelle ladite pluralité de poinçons définissent respectivement ladite largeur de découpe la plus interne (W₅), ladite largeur de découpe la plus externe (W₅) et ladite largeur de découpe intermédiaire (W₁).

14. La machine de production (100) selon la revendication 13, dans laquelle une différence entre chaque paire de largeurs voisines est l'une des suivantes:
progressivement plus petite qu'une différence correspondante entre chaque autre paire voisine desdites largeurs;
progressivement plus grande qu'une différence correspondante entre chaque autre paire voisine desdites largeurs; et
sensiblement égale à une différence correspondante entre chaque autre paire voisine desdites largeurs.

15. La machine de production (100) selon la revendication 13, dans laquelle chaque dite largeur est définie par une paire respective de côtés de matrice opposés d'une pluralité de matrices (220), chaque dite paire de côtés de matrice opposés définissant un profil de découpe sensiblement équivalent à un profil de découpe correspondant défini par chaque dite autre paire de côtés de matrice opposés.
